# EUROPEAN PATENT APPLICATION

(11) **EP 4 787 549 A1**
(43) Date of publication of application: **05.08.2026**
(21) Application number: 24871893.4
(22) Date of filing: 12.09.2024
(51) Int. Cl.: H01M 10/6554, H01M 10/613, H01M 10/625, H01M 10/643, H01M 50/204

(54) **POWER SUPPLY SYSTEM**

(30) Priority: 27.09.2023 JP 2023166510
(71) Applicant: Panasonic Intellectual Property Management Co., Ltd., Kadoma-shi, Osaka 571-0057 (JP)
(72) Inventor: KOHARA, Hikaru, Kadoma-shi, Osaka 571-0057 (JP)
(74) Representative: Novagraaf International SA
(86) International application number: PCT/JP2024/032701
(87) International publication number: WO 2025/070098

(57) **Abstract**

A power supply system comprising: a plurality of battery cells each having an end face; an external housing that houses the plurality of battery cells and has a thermally conductive bottom plate, the lower surface of which is thermally coupled to the end faces of the plurality of battery cells; and a cooling plate that is thermally coupled to a second surface of the bottom plate, the second surface being opposite to a first surface of the bottom plate thermally coupled to the end faces of the plurality of battery cells.

## Description

### TECHNICAL FIELD

The present disclosure relates to a power supply system.

### BACKGROUND ART

A power supply device (power supply system) in which a large number of rechargeable secondary battery cells such as lithium ion secondary batteries are connected in series or in parallel is used (for example, Patent Literature 1) for driving electrical equipment, driving electric mobile bodies such as vehicles or construction machines, or for stationary power storage or backup purposes. The secondary battery cells used in such a power supply device generate heat by charging and discharging, and thus need to be cooled. In order to efficiently cool a large number of secondary battery cells, a cooling plate is thermally coupled to the bottom surface of each secondary battery cell for cooling. In such a cooling method using a cooling plate, it has been required to efficiently conduct heat between the bottom surface of the secondary battery cell and the cooling plate.

In such a cooling method using a cooling plate, it is considered that a bottom plate is interposed between the bottom surface of the secondary battery cell and the cooling plate, and heat is transferred and radiated through the bottom plate. However, when the bottom surface of the secondary battery cell is covered with a bottom plate, there is a problem in that the rigidity of a portion for fixing the power supply device is insufficient.

### Citation List

### Patent Literature

Patent Literature 1: International Publication No. 2014/034079

### SUMMARY OF THE INVENTION

An object of one aspect of the present disclosure is to provide a power supply system that can efficiently cool battery cells with a cooling plate. An object of another aspect is to provide a power supply system with increased rigidity in a configuration in which battery cells are cooled by a cooling plate. Note that the description of these objects and problems of the present disclosure does not preclude the existence of other objects and problems. Also, one aspect of the present disclosure does not need to solve all of these problems. Furthermore, other problems can be derived from the description of the specification, the drawings, and the claims of the present disclosure.

A power supply system according to one aspect of the present disclosure includes: a plurality of battery cells each including an end surface; an external housing which accommodates the plurality of battery cells, has thermal conductivity and includes a bottom plate on a lower surface of the external housing, the bottom plate being thermally coupled to the end surface of each of the plurality of battery cells; and a cooling plate which is thermally coupled to a second surface of the bottom plate, the second surface being opposite to a first surface of the bottom plate which is thermally coupled to the end surface of the each of the plurality of battery cells. The above configuration is advantageous in that the battery cells can be efficiently cooled by the cooling plate.

In a power supply system according to another aspect of the present disclosure, the external housing includes a fixing portion provided with a screw hole for fixing to the cooling plate, the fixing portion being provided on a part of a side surface of the external housing, and the bottom plate includes a protruding portion formed by causing a part of the bottom plate so as to protrude to extend along an end surface of the fixing portion. The above configuration is advantageous in that the rigidity can be increased in the configuration in which the battery cells are cooled by the cooling plate.

### BRIEF DESCRIPTION OF THE DRAWINGS

[FIG. 1] FIG. 1 is a schematic perspective view of a power supply system according to an embodiment of the present invention.
[FIG. 2] FIG. 2 is a schematic exploded perspective view of the power supply system shown in FIG. 1.
[FIG. 3] FIG. 3 is a schematic exploded perspective view of the power supply system shown in FIG. 1 as viewed from below.
[FIG. 4] FIG. 4 is a schematic plan view showing the external housing and the fixing portion.
[FIG. 5] FIG. 5 is a schematic plan view showing the bottom plate and the protruding portion fixed to the external housing.
[FIG. 6] FIG. 6 is a schematic plan view showing a comparative example.
[FIG. 7] FIG. 7 is a schematic plan view showing a protruding portion and a fixing portion according to another embodiment.
[FIG. 8] FIG. 8 is a schematic plan view showing a protruding portion and a fixing portion according to another embodiment.
[FIG. 9] FIG. 9 is a schematic plan view showing a protruding portion and a fixing portion according to another embodiment.
[FIG. 10] FIG. 10 is a schematic plan view showing a protruding portion and a fixing portion according to another embodiment.
[FIG. 11] FIG. 11 is a schematic plan view showing a protruding portion and a fixing portion according to another embodiment.
[FIG. 12] FIG. 12 is a schematic plan view showing a protruding portion and a fixing portion according to another embodiment.
[FIG. 13] FIG. 13 is a schematic exploded perspective view of a power supply system according to another embodiment.
[FIG. 14] FIG. 14 is a schematic perspective view of a power supply system according to another embodiment.

### DESCRIPTION OF EMBODIMENT

Hereinafter, embodiments of the present invention will be described with reference to the drawings. However, the embodiments described below are merely examples for embodying the technical idea of the present invention, and the present invention is not limited to the following power supply system. Further, in the present specification, the members shown in the claims are not in any way limited to the members of the embodiments. In particular, unless specifically stated otherwise, the dimensions, materials, shapes, relative positions, and the like of the components described in the embodiments are merely illustrative examples and are not intended to limit the scope of the present invention. The sizes, positional relationships, and the like of the members illustrated in the drawings may be exaggerated for clarity of description. Further, in the following description, the same names and reference numerals denote the same or similar members, and detailed description thereof will be appropriately omitted. Furthermore, each element constituting the present invention may be configured such that a plurality of elements are constituted by the same member and one member serves as a plurality of elements, or conversely, the function of one member can be shared and realized by a plurality of members. In the present disclosure, the vertical direction is based on the axial direction and the height direction of the battery cell.

The present disclosure may also be specified by the following configurations and features.

A power supply system according to an embodiment of the present disclosure includes: a plurality of battery cells each including an end surface; an external housing which accommodates the plurality of battery cells, has thermal conductivity, and includes a bottom plate on a lower surface of the external housing, the bottom plate being thermally couples to the end surface of each of the plurality of battery cells; and a cooling plate which is thermally coupled to a second surface of the bottom plate, the second surface being opposite to a first surface of the bottom plate which is thermally coupled to the end surface of the each of the plurality of battery cells.

With the above configuration, by interposing a bottom plate having excellent thermal conductivity between the cooling plate and the end surfaces of the battery cells, it is possible to improve the heat dissipation of heat generated by the battery cells.

In a power supply system according to another embodiment of the present disclosure, the external housing include a fixing provided with a screw hole for fixing the cooling plate, the fixing portion being provided on a part of a side surface of the external housing, and the bottom plate includes a protruding portion formed by causing a part of the bottom plate so as to protrude to extend along an end surface of the fixing portion. With the above configuration, the rigidity for fixing the cooling plate to the external housing can be increased. In the case of a shape in which the bottom plate covers only the bottom surface of the battery cell, the portion where the battery cell is disposed, the rigidity around the fixing portion of the battery pack is insufficient. In the present shape, the bottom plate includes a protruding portion formed by causing a part of the bottom plate to protrude so as to extend along an end surface of the fixing portion, so that the protruding portion overlaps the fixing portion to increase the rigidity for fixing the cooling plate to the external housing. In addition, since the bottom plate includes a protruding portion protruding along the end surface of the fixing portion, it is possible to improve the heat dissipation of heat generated by the battery cells.

In a power supply system according to another embodiment of the present disclosure, the external housing is provided, on each of a pair of opposing side surface of the external housing, with a fixing portion protruding along a screw hole, and the bottom plate is provided, on each of a pair of opposing side surface of the bottom plate, with the protruding portion protruding on both sides of the screw hole. With the above configuration, the external housing is fixed to the cooling plate by the fixing portions provided on each of the pair of opposing side surfaces, so that the fixing strength and rigidity can be improved. Further, according to the above configuration, a protruding portion obtained by extending a part of the bottom plate is overlapped with the portion for fixing the cooling plate, so that the fixing strength and rigidity of the external housing to the cooling plate can be enhanced. Further, in the above configuration, the fixing portion is protruded from the side surface along the screw hole, and the protruding portion is protruded to both sides of the screw hole to the external housing, so that the protruding portion is overlapped with the fixing portion in proximity to both sides of the screw hole of the fixing portion fixed to the cooling plate, and the fixing strength and rigidity of the external housing to the cooling plate can be enhanced.

In a power supply system according to another embodiment of the present disclosure, the external housing is provided, on each of the pair of side surfaces intersecting a longitudinal direction of the external housing, with a fixing portion so as to protrude along a screw hole, and the bottom plate is provided, on each end edge of the bottom plate, with the protruding portion protruding on both sides of the screw hole. According to the above configuration, the external housing is provided with a fixing portion on each of the pair of side surfaces intersecting the longitudinal direction, and the bottom plate is provided with at the protruding portion on each of the end edges in the longitudinal direction, so that the fixing strength and rigidity of the external housing to the cooling plate can be increased. With the above configuration, a part of the bottom plate can be extended and overlapped with a portion where the external housing is fixed to the cooling plate, and the fixing strength and rigidity of the external housing to the cooling plate can be enhanced. The protruding portion is protruded on both side of the screw hole to overlap the fixing portion adjacent to the screw hole.

In a power supply system according to another embodiment of the present disclosure, the bottom plate causes the protruding portion to protrude in the same plane. With the above configuration, since the protruding portion protrudes from the bottom plate in the same plane, not only the cost of the components be reduced, but also the protruding portion and the bottom plate are brought into close contact with the fixing portion, the external housing, and the cooling plate in the same plane, the protruding portion is sandwiched between the fixing portion and the cooling plate, the rigidity and the thermal conductivity are increased, and both the rigidity and the thermal conductivity can be achieved.

In a power supply system according to another embodiment of the present disclosure, the protruding portion be fixed to the external housing by screwing. With the above configuration, the bottom plate is physically and reliably fixed to the external housing, and the rigidity can be increased. In the above configuration, the bottom surface of the opened external housing is closed by the bottom plate, and the rigidity of the external housing can be improved as a three-dimensional shape. In the above configuration, the protruding portion can be fixed to the fixing portion protruding from the side surface by screwing. Further, in the above configuration, the external housing is fixed to the cooling plate by a screw inserted into the screw hole of the fixing portion, so that insufficient rigidity around the fixing portion can be eliminated, and sufficient strength and rigidity for supporting and holding the mass of the plurality of battery cells can be secured.

In a power supply system according to another embodiment of the present disclosure, a part of the protruding portin is sandwiched between the fixing portion and the cooling plate. In the above configuration, at least a part of the protruding portion is sandwiched between the fixing portion and the cooling plate, so that the external housing can be fixed to the cooling plate and therefore rigidity can be increased. A screw inserted into the screw hole of the fixing portion protruding from the side surface of the external housing sandwiches the protruding portion obtained by extending a part of the bottom plate and fixes it to the cooling plate, so that insufficient rigidity around the fixing portion can be eliminated and sufficient strength and rigidity for supporting and holding the mass of the plurality of battery cells can be secured. In addition, it is possible to increase the thermal conductivity and achieve both rigidity and thermal conductivity.

In a power supply system according to another embodiment of the present disclosure, the external housing includes the bottom plate as a separate member.

### (First Embodiment)

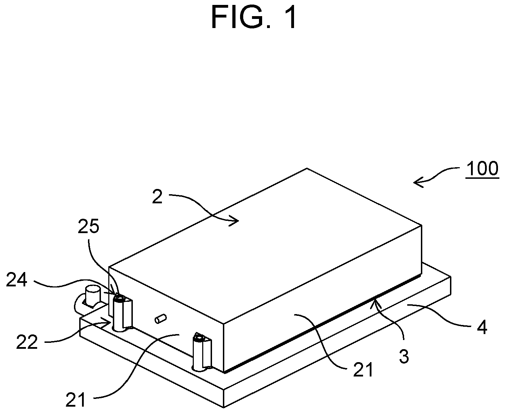

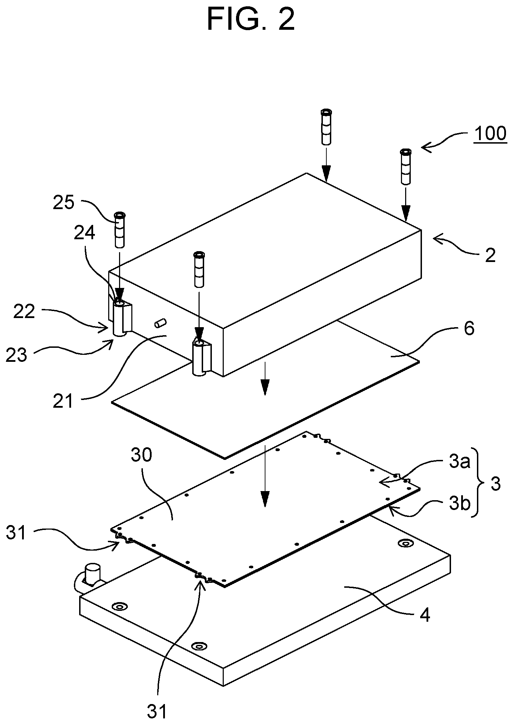

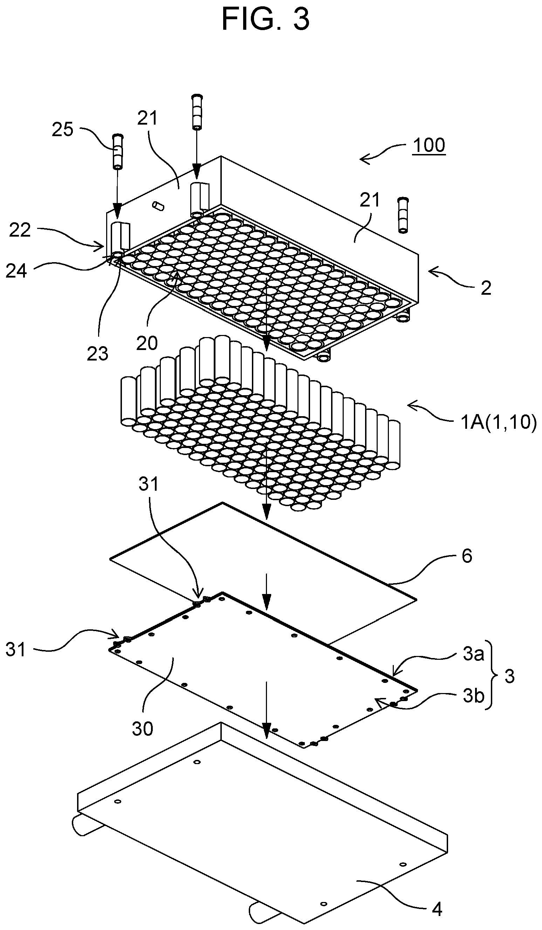

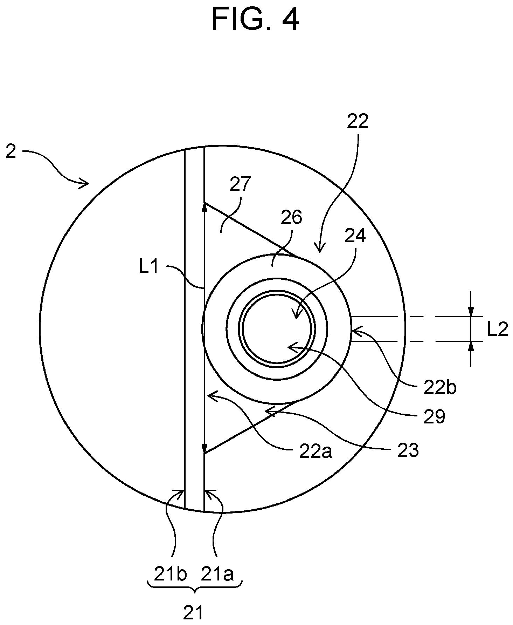

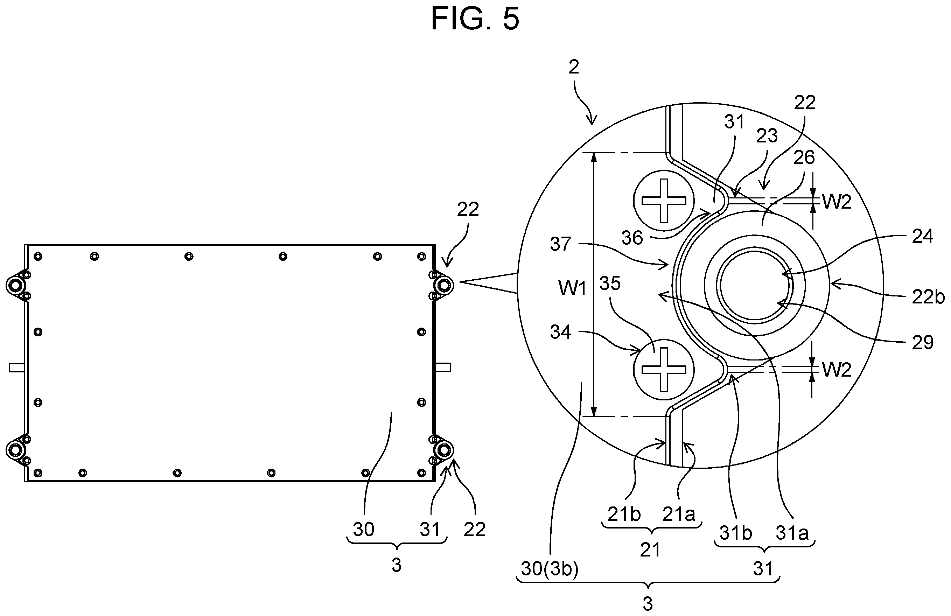

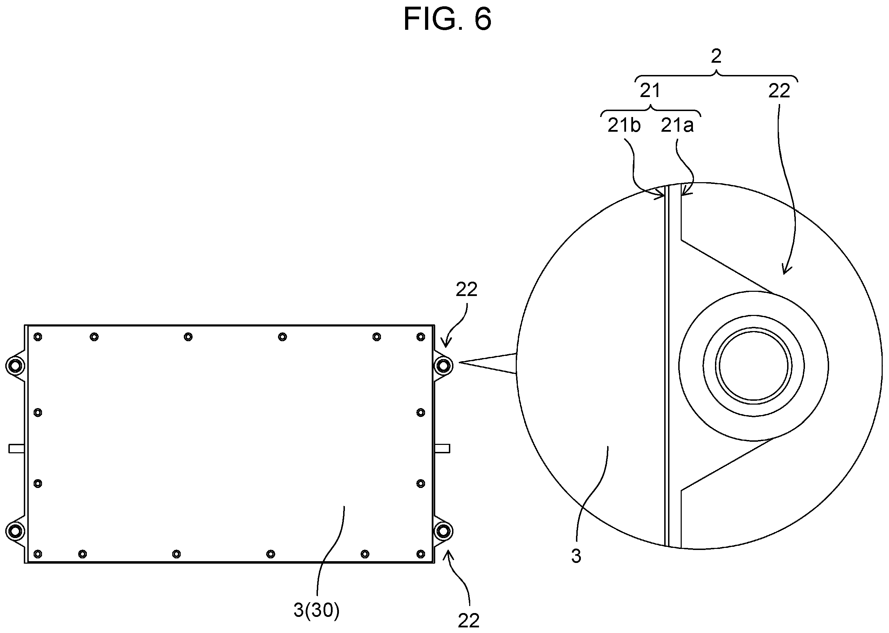

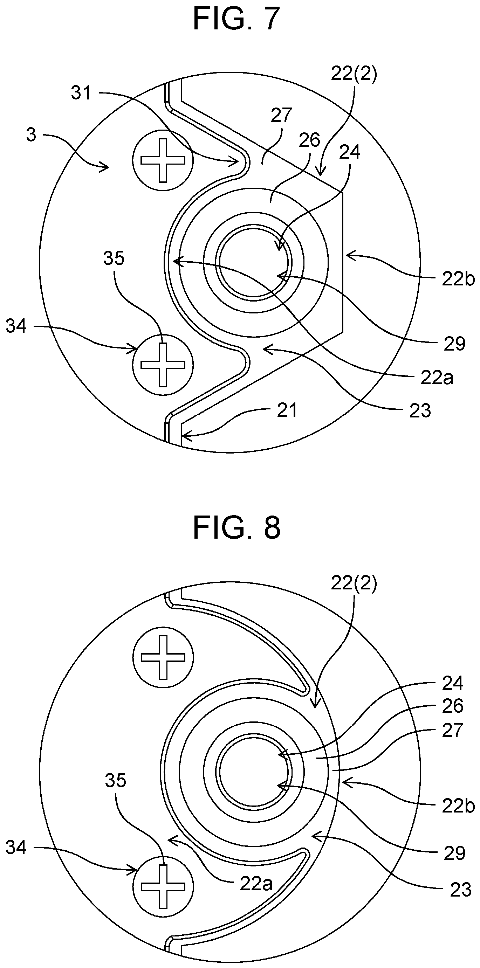

FIGS. 1 to 5 and FIGS. 7 to 12 show a power supply system 100 according to a first embodiment of the present disclosure. FIG. 1 is a schematic perspective view of the power supply system 100, FIG. 2 is a schematic exploded perspective view of the power supply system 100, FIG. 3 is a schematic exploded perspective view of the power supply system 100 as viewed obliquely from below, FIG. 4 is a schematic plan view showing an external housing 2 and a fixing portion 22, FIG. 5 is a schematic plan view showing a bottom plate 3 and a protruding portion 31
fixed to the external housing 2, FIG. 6 is a schematic plan view showing a comparative example, and FIGS. 7 to 12 are schematic plan views showing the protruding portion 31 and the fixing portion 22 of other embodiments.

The power supply system 100 is used for driving an electric device, driving an electric moving body such as a vehicle or a construction machine, or for stationary power storage or backup purposes by connecting a large number of chargeable battery cells such as lithium-ion secondary batteries in series or in parallel.

### (Power Supply System 100)

The power supply system 100 shown in FIGS. 1 to 3 includes a plurality of battery cells 1 each having an end surface, an external housing 2 which accommodates the plurality of battery cells 1 and includes a thermally conductive bottom plate 3 provided on a lower surface of the external housing 2, and a cooling plate 4 which thermally coupled to a second surface 3b on the opposite side (back surface of the first surface 3a) to a first surface 3a that is thermally coupled to the lower end faces of the plurality of battery cells 1 of the bottom plate 3.

### (Battery Cell 1)

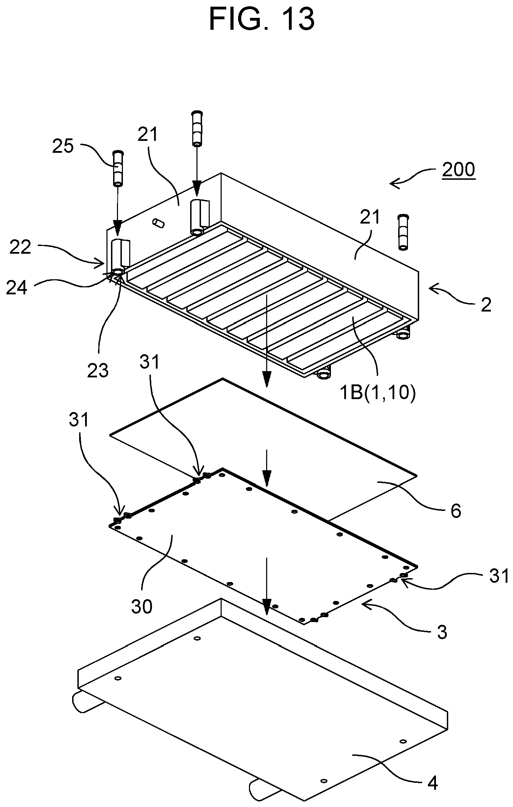

The battery cell 1 is a chargeable secondary battery cell, has a cylindrical outer shape, and has positive and negative electrode terminals on both end surfaces. The plurality of battery cells 1 are stacked to form a battery block 10. The battery block 10 in FIG. 3 has a rectangular parallelepiped shape in which a plurality of battery cells 1 are arranged in parallel with each other and both ends thereof are arranged on the same plane. A large number of battery cells 1 are electrically connected by lead plates, bus bars, etc. In FIG. 3, the power supply system 100 uses the battery cell 1 as a cylindrical battery 1A. The cylindrical battery 1A is disposed in parallel to the external housing 2, and electrode terminals at both ends thereof are exposed to both surfaces of the external housing 2 and are electrically connected by lead plates. In the cylindrical battery 1A, an electrode assembly is housed in a cylindrical outer can, the outer can is filled with an electrolyte solution, and an opening of the outer can is sealed with a sealing plate. The cylindrical battery 1A uses, as positive and negative electrode terminals, the bottom surface of the outer can, which is one of both end surfaces, and an electrode provided at a central portion of the sealing plate. Although the power supply system 100 in FIG. 3 uses the battery cell 1 as the cylindrical battery 1A, the present disclosure does not specify the battery cell 1 as the cylindrical battery 1A and may use, for example, a rectangular battery 1B (FIG. 13). The battery cell 1 is a non-aqueous electrolyte secondary battery cell, such as a lithium ion battery. However, in the present disclosure, the battery cell 1 is not limited to a lithium ion battery, and all secondary batteries that are currently used and will be developed, such as other non-aqueous electrolyte secondary batteries and nickel-metal hydride batteries, can be used. In the present disclosure, any secondary battery can be used as long as the cooling plate 4 is disposed to face a bottom surface of the battery cell 1 so that the bottom surface of the battery cell 1 can serve as a cooling surface.

### (External Housing 2)

The external housing 2 houses a plurality of battery cells 1. The external housing 2 includes a thermally conductive bottom plate 3 which is provided on a lower surface and is thermally coupled to the end surfaces of the plurality of battery cells 1. The external housing 2 shown in FIG. 3 has a holder 20 for arranging a plurality of battery cells 1 to be housed in predetermined positions and postures, and the plurality of battery cells 1 can be inserted into the battery housing portions and arranged in fixed positions in parallel postures. The external housing 2 can house one or a plurality of battery blocks 10 in units of battery block 10 and arrange a plurality of battery cells 1 at fixed positions in parallel postures.

The external housing 2 of FIG. 3 has an upper surface, a side surface 21, and a bottom plate 3 that closes an open lower surface. The side surface 21 has an inner surface 21a facing the battery cell 1 to be housed and an outer surface 21b on the opposite side. The external housing 2 may be formed by integrating the side surface 21 and a battery housing portion such as the holder 20, or may be formed as separate members. In addition, the external housing 2 can be configured with the side surface 21 and the bottom plate 3 as separate members. The side surface 21 can be integrated with the battery housing portion. For example, in the case of the rectangular battery 1B illustrated in FIG. 13, the external housing 2 includes a bind bar, an end plate for arranging a plurality of battery cells 1 at predetermined positions and postures.

The external housing 2 has a fixing portion 22 that fixes the external housing 2 at a predetermined position. The fixing portion 22 is provided in a part of the side surface 21 of the external housing 2, and has a screw hole 24 for fixing the external housing 2 to the cooling plate 4. The external housing 2 in FIG. 1 is a simplified example and has a rectangular parallelepiped shape having a top surface, a side surface 21, and a bottom plate 3 as the bottom surface. The external housing 2 in FIG. 1 has a box shape with a rectangular upper surface, in which two fixing portions 22 are provided on each of a pair of opposing surfaces of the side surface 21. The external housing 2 houses a plurality of battery cells 1. For example, the external housing 2 can have the battery cells 1 inserted from the opened bottom surface side. Further, the box-shaped external housing 2 can be divided into an upper case and a lower case, and the battery cells 1 can be inserted into the external housing 2. Further, the battery cells 1 can be inserted from the opened bottom surface side of the external housing 2 integrated with the bottom plate 3. The external housing 2 can be configured to house in units of battery cell 1 or battery block 10. However, the shape, size, configuration of the external housing 2, and the method of housing the battery cells are not limited to these. For example, the external housing 2 can be configured with a flat surface, a curved surface, or a combination thereof, and irregularities, grooves, steps, inclined surfaces can be provided on the outer surface according to the size or shape of the battery block or according to the shape of the main body on which the power supply system is mounted.

### (Fixing portion 22)

The fixing portion 22 in FIG. 1 fixes the external housing 2 to the cooling plate 4. The fixing portion 22 is provided on the side surface 21 of the external housing 2. The fixing portion 22 in FIG. 1 is provided on the outer surface 21b of the side surface 21 of the external housing 2. The fixing portion 22 in FIG. 1 has a convex shape protruding outward from the side surface 21. This fixing portion 22 secures a rectangular parallelepiped (rectangular) battery housing shape in the side surface 21 while keeping the thickness of the side surface 21 constant or within a certain range, and can maintain and improve the rigidity of the device and realize high output while suppressing and reducing the material and manufacturing cost. However, in the side surface 21, the fixing portion 22 can be provided by thickening only the region where the fixing portion 22 is provided, or the fixing portion 22 can be provided on the inner surface 21a of the side surface 21.

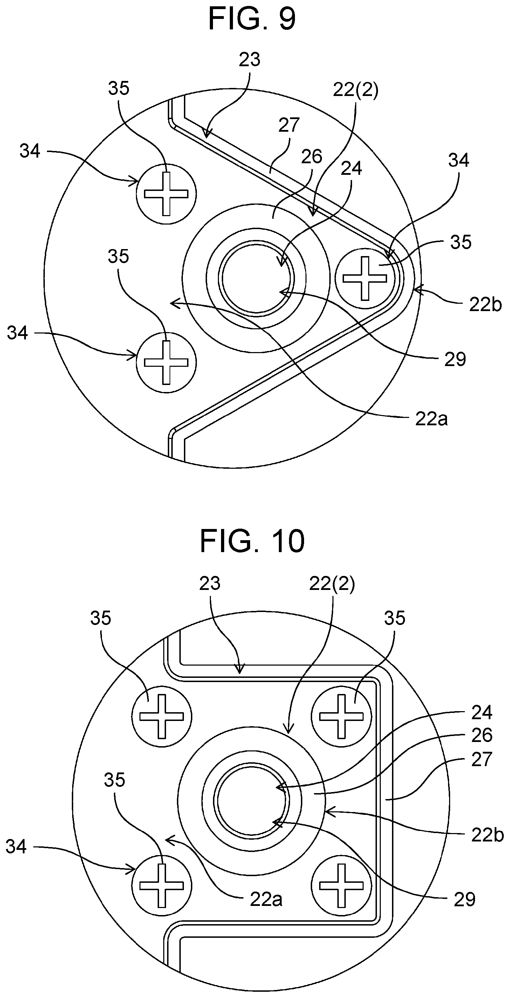

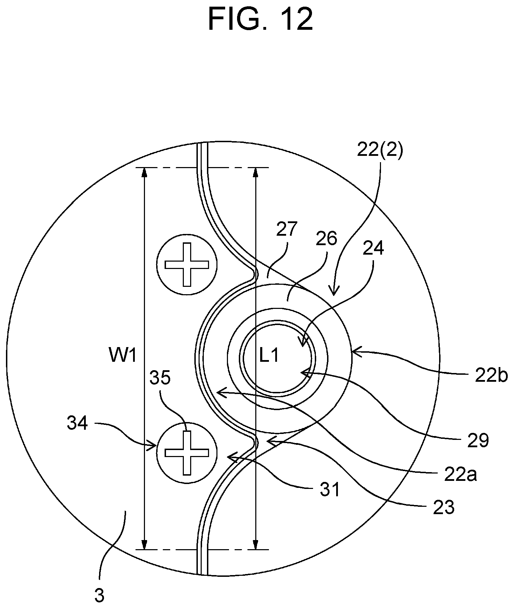

The present disclosure does not specify the shape, size, or configuration of the fixing portion 22. For example, the horizontal cross-sectional shape of the fixing portion 22 may be a triangle (FIGS. 4, 5, and 9), a quadrangle (FIG. 10), a trapezoid (FIG. 7), a polygon, or a half shape or divided shape of any of these, or may be a regular shape such as a semicircle (FIG. 8), a semi-ellipse, or an irregular shape. In the present disclosure, the shape includes a substantially approximate shape. The fixing portion 22 can have an outer surface that is planar, curved, or a combination of planar and curved. For example, the fixing portion 22 can be chamfered at the corners, can be shaped to match the shape and arrangement of the boss screw 26, and can have the portion where the fixing portion 22 is connected to the side surface 21 as a curved surface (FIG. 12). The bottom surface 23 of the fixing portion 22 can be flat, or can be provided with steps, irregularities, grooves, slopes. The bottom surface 23 of the fixing portion 22 can be shaped to match the shape and arrangement of the boss screw 26. For example, in the bottom surface 23 of the fixing portion 22, the bottom surface of the boss screw 26 can be arranged at a position lower than the bottom surface other than the boss screw 26, and the protruding portion 31 to be described later can be arranged to protrude to both sides of the boss screw 26 (screw hole 24). The bottom surface of the boss screw 26 and the bottom surface of the protruding portion 31 can be at the same height or at different heights. The bottom surface 23 of the fixing portion 22 can be shaped to conform to the shape of the cooling plate 4 to be connected and fixed, so that the external housing 2 can be stably fixed and the fixing strength can be improved.

In the fixing portion 22 of FIG. 4, the bottom surface 23 and the horizontal cross-sectional shape are triangular, the boss screw 26 is disposed in the central region of the fixing portion 22, and the vertex angle (distal end 22b) side of the triangle is curved by the thickness of the boss screw 26. The fixing portion 22 has a shape conforming to the shape of the boss screw 26 (screw hole 24), and can secure the fixing strength of the external housing 2 with a predetermined thickness. The fixing portion 22 in FIG. 1 has a triangular prism shape with the same horizontal cross-sectional shape as the bottom surface 23, but the fixing portion 22 may have a horizontal cross-sectional shape different from the bottom surface 23 or a partially different horizontal cross-sectional shape. For example, the area of the bottom surface 23 can be made larger than that of the opposing upper surface or middle section, thereby further improving the fixing strength and rigidity of the external housing 2.

The fixing portion 22 has a coupling portion 22a on the root side where the fixing portion 22 is connected to the external housing 2, and a distal end 22b on the distal side of the fixing portion 22 that protrudes the most from the coupling portion 22a and is farthest from the coupling portion 22a. The fixing portion 22 is connected to the external housing 2 via the coupling portion 22a. In the fixing portion 22 of FIG. 4, on the bottom surface 23, the length (L1) of the coupling portion 22a connected to the external housing 2 is longer than the length (L2, the length of the tangent of the curved surface in the figure) of the distal end 22b. In the fixing portion 22 of FIG. 4, the bottom surface 23 has a triangular shape, and is tapered from the relatively wide coupling portion 22a side toward the narrow distal end 22b side. Since the coupling portion 22a is wider than the distal end 22b, a region close to the side surface 21 together with the side surface 21 can be fixed to the cooling plate 4 by sandwiching the bottom plate 3 (protruding portion 31) between the fixing portion 22 having the wide coupling portion 22a and the cooling plate 4. This extremely simple configuration can efficiently improve the fixing strength and rigidity of the external housing 2. Further, as shown in FIG. 12, the coupling portion 22a side of the fixing portion 22 can be formed as a smooth curved surface to further increase the length (L1) of the coupling portion 22a on the root side, which can contribute to further improvement of the fixing strength and rigidity of the external housing 2.

The convex-shaped fixing portion 22 protruding to the outside of the side surface 21 makes it possible to provide the bottom plate 3 with the protruding portion 31 to be described later overlapping the fixing portion 22. The protruding portion 31 can increase the area of the bottom plate 3 sandwiched and fixed between the battery block 10 and the cooling plate 4. In particular, similarly to the fixing portion 22, the area of the coupling portion 31a on the root side to be connected can be increased, and the protruding portion 31 can be sandwiched between the fixing portion 22 and the side surface 21 and the cooling plate 4. Furthermore, a screw hole 34 can be provided in the protruding portion 31, and a screw 35 can be screwed in to fix the protruding portion 31 to the fixing portion 22. These are combined to allow the bottom plate 3, which is interposed and fixed between the plurality of battery cells 1 and the cooling plate 4, to be firmly fixed to the external housing 2, and the rigidity of the power supply system 100 can be efficiently improved with a simple structure.

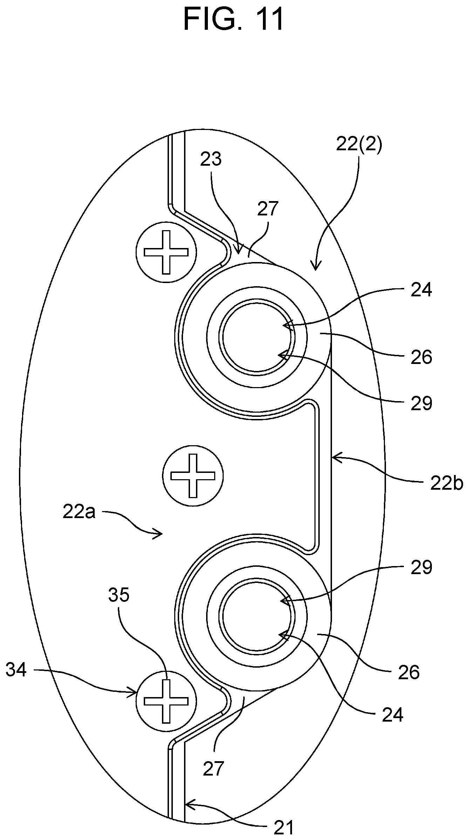

In the fixing portion 22 of FIG. 4, a screw hole 24 through which a screw or shaft (hereinafter referred to as screw 25) is inserted is provided. The external housing 2 is fixed to the cooling plate 4 via the screw 25 inserted through the screw hole 24. The screw hole 24 may be provided with a female screw portion or shaft hole, for example, by press-fitting a spacer or nut into a boss of the molded product during or after molding, to secure the external housing 2 to the cooling plate 4 through the screw 25. The screw hole 24 of FIG. 4 is provided in the central region 29 of the fixing portion 22. The central region 29 indicates a region other than the outer peripheral edge, including the center or the center of gravity of the fixing portion 22. The fixing portion 22 of FIG. 4 comprises a boss screw 26 and a boss screw coupling portion 27 that couples the boss screw 26 to the external housing 2. A screw hole 24 is provided in the boss screw 26. The boss screw coupling portion 27 in FIG. 4 consists of two triangles on the coupling portion 22a side that connect to the outer edge of the boss screw 26, connect the boss screw 26 to the external housing 2, and support and fix the boss screw 26. The two triangular boss screw coupling portions 27 connect the boss screw 26 to the external housing 2. Each fixing portion 22 may be provided with one or more screw holes 24. FIG. 11 shows an example of a fixing portion 22 having two screw holes 24. When the fixing portion 22 has a plurality of screw holes 24, the plurality of screw holes 24 can be provided at intervals, or the plurality of screw holes 24 can be provided close to each other. As the area of the fixing portion 22 having a plurality of screw holes 24 increases, the area of the protruding portion 31 can also be increased, and the screw holes 34 can be provided in various ways.

The external housing 2 may have one or more fixing portions 22 on the side surface 21. By providing the external housing 2 with fixing portions 22 on each of a pair of opposing side surfaces 21, the opposing side surfaces 21 are separated by the interval of one side, and the fixing portions 22 can be arranged on both ends of the opposing side surfaces 21, thereby efficiently improving the fixing strength of the external housing 2. In a case where the shape of the side surface 21 is rectangular, the external housing 2 can have fixing portions 22 on either or both of a pair of opposing short sides of the side surface 21 and a pair of opposing long sides of the side surface 21. In the case of a square, the external housing 2 can similarly have fixing portions 22 on any pair of opposing side surfaces 21. The external housing 2 can be provided with fixing portions 22 on each of a pair of side surfaces 21 crossing the longitudinal direction, with the fixing portions 22 protruding along the screw holes 24. The external housing 2 may have one or more fixing portions 22 on each of the opposing side surfaces 21. As shown in FIG. 4, in particular, the external housing 2 has a plurality (two in FIG. 4) of fixing portions 22 on each of the opposing side surfaces 21, and by arranging the plurality of fixing portions 22 at the corner portions or near the corner portions of the side surfaces 21, the fixing portions 22 can be arranged at positions close to both ends of a diagonal of the side surfaces 21 at intervals close to the diagonal, thereby more efficiently improving the fixing strength of the external housing 2. Improving the fixing strength of the three-dimensional external housing 2 leads to improved rigidity of the power supply system. The corner portion indicates a region from the corner to the center of one surface of the side surface 21, including the corner and the vicinity of the corner of one surface of the side surface 21.

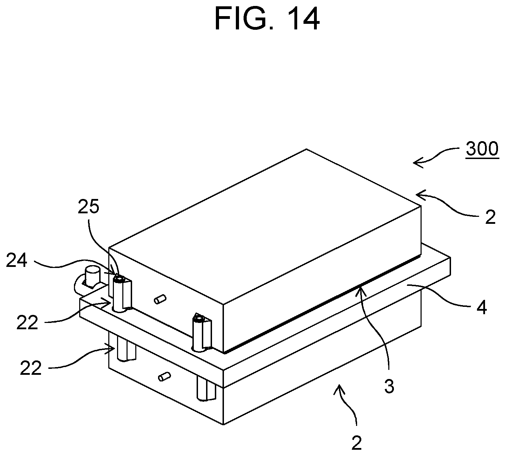

The fixing portion 22 in FIG. 2 fixes the external housing 2 to the cooling plate 4. However, the fixing portion 22 can also fix the external housing 2 to something other than the cooling plate 4. For example, the fixing portion can fix the external housing 2 to a case, or can fix the external housing 2 to both a case and the cooling plate 4. In addition, a pair of external housing 2 may be disposed with the cooling plate 4 sandwiched between them, the fixing portion 22 may fix each of the external housing 2 to each other, and each external housing 2 may be fixed to the cooling plate 4 (FIG. 14).

The fixing portion 22 in FIG. 2 fixes the external housing 2 to the cooling plate 4 by fastening (screwing) the screw 25. The fixing portion 22 in FIG. 2 has a screw hole 24 through which the screw 25 is inserted, and the external housing 2 is fixed to the cooling plate 4 via the screw 25 that passes through the screw hole 24. The screw 25 inserted into the screw hole 24 of the fixing portion 22 is screwed into the cooling plate 4, so that the external housing 2 can be easily and firmly fixed. In the method of fixing the external housing 2 to the cooling plate 4 by screwing the fixing portion 22, the bottom plate 3 is sandwiched between the plurality of battery cells 1, which are arranged at predetermined positions in the external housing 2, and the cooling plate 4, so that the external housing 2 can be reliably fixed to the cooling plate 4. Moreover, since the external housing 2 is screwed to the cooling plate 4 at the fixing portion 22, the degree of close contact between the two is increased and they are fixed, so that the fixing strength of the bottom plate 3 sandwiched between the plurality of battery cells 1 housed in the external housing 2 and the cooling plate 4 can be improved, and the rigidity via the bottom plate 3 can be improved. Furthermore, the thermal coupling state between the end surfaces of the plurality of battery cells 1 and the bottom plate 3, and the thermal coupling state between the bottom plate 3 and the cooling plate 4 can be improved, the thermal conductivity can be improved, a decrease in cooling performance can be prevented or suppressed, and both rigidity and thermal conductivity can be achieved. The fixing portion 22 can fix the external housing 2 by a method other than screwing.

### (Bottom plate 3)

The bottom plate 3 is disposed under the plurality of battery cells 1 and is interposed between the plurality of battery cells 1 and the cooling plate 4. The bottom plate 3 has a first surface 3a that is thermally coupled to the end surfaces of the plurality of battery cells 1, and a second surface 3b that is thermally coupled to the cooling plate 4 on the side opposite to the first surface 3a. The first surface 3a and the second surface 3b can be shaped according to the shape of the objects to be thermally coupled. The bottom plate 3 is, on the one hand, a member that supports the plurality of battery cells 1 and reinforces the external housing 2 to improve rigidity, and on the other hand, a heat conducting member that conducts heat generated from the plurality of battery cells 1 to the cooling plate 4 to dissipate the heat to the outside. Since the bottom plate 3 is sandwiched between the battery block 10 and the cooling plate 4 and is reliably fixed in a stable state, the bottom plate 3 supports the battery block 10 from below, reduces the burden on the cooling plate 4 to which the weight of the battery block 10 is directly applied, and improves the rigidity of the power supply system. The bottom plate 3 is made of a material and has a thickness that can support the battery block 10 from below and reduce the burden on the cooling plate 4, and is selected appropriately according to the mass of the battery block 10. In addition, by adopting a structure in which the bottom plate 3 has thermal conductivity, it is possible to suppress or reduce a decrease in cooling performance due to the cooling plate 4 even when the bottom plate 3 is interposed, and it is possible to realize a structure in which both rigidity and thermal conductivity due to the bottom plate 3 are achieved. The bottom plate 3 is preferably a member having high thermal conductivity, and for example, aluminum, copper, or an alloy containing any of them can be used.

### (Protruding portion 31)

The bottom plate 3 includes the protruding portion 31 formed by causing a part of the bottom plate 3 to protrude so as to along the end surface of the fixing portion 22. The bottom plate 3 has a bottom plate body 30, which is the main body of the bottom plate 3, and the protruding portion 31 at the periphery of the bottom plate body 30. The protruding portion 31 is extended outward beyond the inner surface 21a of the side surface 21 of the connected external housing 2. The protruding portion 31 is a portion that is extended outward beyond the inner surface 21a of the side surface 21 of the external housing 2. Since the bottom plate 3 has the protruding portion 31, the protruding portion 31 can be sandwiched between the fixing portion 22 of the external housing 2 and the cooling plate 4 to fix the external housing 2 to the cooling plate 4, thereby improving the fixing strength and rigidity. This is because, in addition to the thickness of the side surface 21, the external housing 2 can be fixed to the cooling plate 4 by sandwiching the protruding portion 31 that extends outward from the side surface 21.

The protruding portion 31 in FIG. 5 is extended further outward than the outer surface 21b of the side surface 21 of the connected external housing 2. This makes it possible to further increase the area of the protruding portion 31. When the area of the protruding portion 31 is large, the thermal conductivity can be improved. This allows the protruding portion 31 to more easily draw heat from the plurality of battery cells 1 and conduct the heat to the cooling plate 4, thereby maintaining the cooling performance of the cooling plate 4. In addition, the protruding portion 31 extended outward beyond the outer surface 21b of the side surface 21 can extend the protruding portion 31 to the outer edge where the battery cells 1 are not present on the protruding portion 31, and the protruding portion 31 is separated from the bottom surface of the plurality of battery cells 1 in the horizontal direction, so that it is possible to improve the heat dissipation property and the heat dissipation efficiency of the plurality of battery cells 1, which are disposed inside, in the vicinity of the side surface 21 and in which heat is easily accumulated.

The present disclosure does not specify the shape, size, or configuration of the protruding portion 31. The protruding portion 31 can have, for example, a horizontal cross-sectional shape of one or more triangles (FIGS. 5 and 9), quadrilaterals (FIG. 10), trapezoids (FIG. 7), polygons, or a half shape or divided shape of any of these, and can be of a regular shape such as a semicircle (FIG. 8), a semi-ellipse, or an irregular shape. Any shape includes a substantially shape. The protruding portion 31 can be formed by arranging or connecting a plurality of shapes of the same or different types. The protruding portion 31 in FIG. 5 has a configuration in which two line-symmetric triangles (two peaks) are connected. The protruding portion 31 can have an outer surface that is planar, curved, or a combination of planar and curved surfaces. For example, the corners of the protruding portion 31 can be chamfered, the shape can be adapted to the shape and arrangement of the boss screw 26, and the coupling portion 31a of the protruding portion 31 can be curved. Each protruding portion 31 can have one or more screw holes 34. In the protruding portion 31 of FIG. 5, a part of the bottom plate 3 protrudes along the end surface of the fixing portion 22. In the protruding portion 31, screw holes 34 are formed on both sides of the screw hole 24 as a shape protruding on both sides of the screw hole 24 of the fixing portion 22. Each protruding portion 31 in FIG. 5 has two screw holes 34 opened adjacent to both sides of the screw hole 24. The protruding portion 31 in FIG. 5 has a shape in which two triangles are connected along the periphery of the boss screw 26 (screw hole 24) of the fixing portion 22, and the two triangles on both sides of the screw hole 24 each have one screw hole 34.

The protruding portion 31 in FIG. 5 is a region surrounded by the screw hole periphery 36 around the screw hole 24, the fixing portion outer edge 37 along the outer edge of the fixing portion 22, and the coupling portion 31a on the root side where the protruding portion 31 is connected to the bottom plate body 30. The screw hole periphery 36 is an arc that curves along the circular screw hole 24 or the boss screw 26. The fixing portion outer edge 37 is two triangles on both the left and right sides with the coupling portion 31a as the base, the left oblique side of the left triangle and the right oblique side of the right triangle are arranged along the outer edge of the triangular fixing portion 22 (the oblique sides of the left and right approximate triangles of the boss screw coupling portion 27), and the right oblique side of the left triangle and the left oblique side of the right triangle are connected along the outer edge of the boss screw 26. This configuration can achieve both rigidity and thermal conductivity while securing the coupling strength by the boss screw 26. The protruding portion 31 in FIG. 5 has a shape in which two triangles are connected by an arc-shaped screw hole periphery 36.

The protruding portion 31 has a coupling portion 31a on the root side where the protruding portion 31 is connected to the bottom plate body 30, and a distal end 31b on the distal end side of the protruding portion 31, which protrudes furthest from the coupling portion 31a and is furthest from the coupling portion 31a. The protruding portion 31 is connected to the bottom plate body 30 via the coupling portion 31a. The protruding portion 31 in FIG. 5 has a shape in which the length (W1) of the coupling portion 31a connected to the bottom plate body 30 is longer than the length (W2, the length of a tangent to a curved surface in the figure) of the distal end 22b on the distal end side of the protruding portion 31. In the protruding portion 31 of FIG. 5, two triangles are connected in the vicinity of the base on the coupling portion 31a side to form a relatively wide coupling portion 31a, and each triangle is tapered from the coupling portion 31a side toward the narrow distal end 31b side (vertex side). Since the coupling portion 31a is wider than the distal end 31b, a region close to the side surface 21 can be fixed together with the side surface 21 by sandwiching the wide coupling portion 31a, and this extremely simple configuration greatly contributes to an efficient improvement in rigidity. The larger area of the coupling portion 31a on the root side can be sandwiched between the fixing portion 22 and the cooling plate 4, and there is space to provide the screw hole 34 at or near the coupling portion 31a. The protruding portion 31 protrudes to both sides of the screw hole 24 and is close to both sides of the screw hole 24, and the screw hole 34 is formed in the coupling portion 31a, and is fixed by screwing the screw 35, so that the fixing strength and rigidity of the bottom plate 3 and the external housing 2 can be efficiently improved. The protruding portion 31 is screwed to the fixing portion 22 with the screw 35 to fix the bottom plate 3 to the external housing 2, and the external housing 2 is further fixed to the cooling plate 4 by screwing the screw 25 of the fixing portion 22, thereby efficiently improving the rigidity of the power supply system 100. This is because, in particular, the vicinity of the coupling portion 31a is likely to vibrate and greatly affects the rigidity. In addition, similarly to the fixing portion 22, as shown in FIG. 12, the coupling portion 31a side of the protruding portion 31 can be formed as a smooth curved surface to further increase the length (W1) of the coupling portion 31a on the root side, which can contribute to further improvement of the rigidity of the power supply system 100.

The protruding portion 31 increases the area of the bottom plate 3. In particular, the protruding portion 31 is provided on the peripheral edge of the bottom plate body 30, and protrudes outward from the coupling portion 31a, which is close to the battery block 10 and greatly affects heat dissipation, so that the thermal conductivity can be improved. Further, by protruding along the end surface of the fixing portion 22, the bottom plate 3 has a range and shape that efficiently and significantly contribute to rigidity and thermal conductivity while minimizing an increase in material cost due to the increased area of the bottom plate 3. This configuration can achieve both rigidity and thermal conductivity.

The protruding portion 31 at least partially overlaps the bottom surface 23 of the fixing portion 22 in plan view. The protruding portion 31 can overlap, for example, 10% or more, preferably 20% or more of the bottom surface 23 of the fixing portion 22. The larger the area of the overlap, the larger the contact area between the bottom plate 3 and the external housing 2. In particular, the protruding portion 31 at the outer edge of the bottom plate 3 can increase the contact area with the fixing portion 22 in the vicinity of the side surface 21, and the fixing strength of the bottom plate 3 interposed between the battery block 10 and the cooling plate 4 accommodated in the external housing 2 can be improved. In addition, the wider the overlap, the more space is available for providing the screw hole 34 in the protruding portion 31, and the screw 35 can be screwed into the protruding portion 31 to be fixed to the fixing portion 22, so that the fixing strength of the bottom plate 3, and consequently the rigidity of the power supply system 100, can be improved. Furthermore, the thermal conductivity of the bottom plate 3 can also be improved in a stable close contact state due to the improvement in rigidity, and both rigidity and thermal conductivity can be achieved.

In the coupling portion 31a of the protruding portion 31, for example, the coupling portion 31a can overlap 60% or more of the bottom surface 23 of the fixing portion 22 with which it is in contact, preferably 70% or more, more preferably 80% or more, and most preferably substantially the entire range of the bottom surface 23 of the fixing portion 22 with which it is in contact, within a range in which both ends of the coupling portion 31a of the protruding portion 31 do not protrude. This is because, by having the coupling portion 31a on the root side connected to the bottom plate body 30 overlap the bottom surface 23 of the fixing portion 22 and the protruding portion 31 with a wide width (area), it is possible to more efficiently contribute to the improvement of rigidity and thermal conductivity even on the distal end 31b side, and thus achieve both.

The protruding portion 31 can be shaped to match the shape of the bottom surface 23 of the fixing portion 22. The protruding portion 31 in FIG. 5 is arranged within the range of the bottom surface 23 of the fixing portion 22. In the power supply system 100, the protruding portion 31 does not protrude out of the range of the bottom surface 23 of the fixing portion 22, and both rigidity and thermal conductivity can be efficiently improved. This contributes to improvement in rigidity and thermal conductivity while suppressing an increase in material cost of the bottom plate 3, and also contributes to downsizing of the power supply system 100. However, the protruding portion 31 can be made larger than the bottom surface 23 of the fixing portion 22, and the size and shape of the protruding portion 31 can be set to extend outside the range of the bottom surface 23 of the fixing portion 22. Also, the protruding portion 31 can be provided in a place other than the screw hole 24 or the boss screw 26. By providing the protruding portion 31 of FIG. 5 on the outer periphery of the boss screw 26, the flatness of the contact surface of the boss screw 26 can be maintained, and the rigidity by the fastening of the screw 25 can be maintained.

The bottom plate 3 in FIG. 5 is fixed to the external housing 2. The bottom plate 3 in the figure is screwed and fixed to the external housing 2 by the screw 35. Since the bottom plate 3 is screwed to the external housing 2, the rigidity of the power supply system 100 can be improved. The bottom plate 3 is screw-fastened and fixed at the side surface 21 of the external housing 2 or at a predetermined position or interval inside the external housing 2. For example, in the bottom plate 3 of FIG. 5, in addition to the four corners of the rectangular shape, four portions are screwed to each of the long side edges and two portions are screwed to each of the short side edges (a total of 16 portions). Further, two portions of each protruding portion 31 protruding to both sides of the screw hole 24 in the vicinity of the screw hole 24 of the fixing portion 22 at the four portions are screwed to both sides of the screw hole 24, and the bottom plate 3 is screwed to the side surface 21 of the external housing 2 at a total of 24 portions. Since the bottom plate 3 is firmly fixed to the external housing 2, the bottom plate 3 serves as a bottom plate for closing the bottom surface 23 of the external housing 2, and the three-dimensional shape of the external housing 2 and the bottom plate 3 can increase the rigidity and reduce the burden of the weight of the battery block 10 on the cooling plate 4.

In FIG. 5, the protruding portion 31 is fixed to the fixing portion 22 by screwing. The protruding portion 31 can have the screw hole 34 opened, and the screw hole 34 can be opened at a position corresponding to the protruding portion 31. The protruding portion 31 in FIG. 5 is protruded on both sides of the screw hole 24, and the screw hole 34 is opened in the coupling portion 31a adjacent to both sides of the screw hole 24. When all or a part of the screw hole 34 is provided within the range of the protruding portion 31, the screw 35 that fixes the bottom plate 3 to the external housing 2 can be screwed and fixed at a position close to the coupling portion 31a and close to the screw hole 24 of the fixing portion 22, so that the natural frequency can be efficiently increased, and the rigidity can be efficiently improved. It can be fixed to the fixing portion 22 (external housing 2) via the screw engagement of the protruding portion 31 and further fixed to the cooling plate 4 via the screw engagement of the fixing portion 22. Fixing strength and rigidity can be improved. When the external housing 2 and the cooling plate 4 are screwed together, the protruding portion 31, which is an extension of a part of the bottom plate 3, is sandwiched, and the protruding portion 31 is screwed to the fixing portion 22. Therefore, the sandwiched bottom plate 3 is physically reliably fixed, and rigidity can be improved via the bottom plate 3. The screwing of the screw hole 34 and the screw 35 of the protruding portion 31 is in a shape and manner that do not hinder thermal coupling with the cooling plate 4 and close contact between the bottom plate 3 and the cooling plate 4.

The protruding portion 31 in FIG. 5 is fixed in contact with the fixing portion 22. By bringing the protruding portion 31 into contact with and fixing it to the fixing portion 22, it can be firmly fixed and rigidity can be improved. The screw engagement of the protruding portion 31 improves the fixing strength and increases the degree of close contact. Accordingly, it is possible to improve the thermal coupling state between the end surfaces of the plurality of battery cell 1 and the bottom plate 3 and the thermal coupling state between the bottom plate 3 and the cooling plate 4, improve the thermal conductivity, prevent and suppress a decrease in cooling performance, and realize both the rigidity and the thermal conductivity of the power supply system 100 with the bottom plate 3 interposed therebetween.

The first embodiment (FIG. 5) and the comparative example (FIG. 6) were compared by analyzing the resonance frequency (natural frequency). Embodiment 1 (FIG. 5) has the protruding portion 31 in which the bottom plate 3 overlaps the fixing portion 22, and the protruding portion 31 is fixed to the fixing portion 22 by screwing the screw 35. On the other hand, in the comparative example (FIG. 6), the bottom plate 3 does not have the protruding portion 31 and does not have the screw 35 screwing in this portion. In both cases, except for the presence or absence of the protruding portion 31 and the presence or absence of the screw engagement of the screw 35, the conditions were the same, such as 160 battery cell 1, a weight of 20 kg, and the provision of the fixing portion 22 at a total of four positions, that is, two positions on each side surface 21 of the opposing short sides of the external housing 2. Each bottom plate 3 is fixed to the external housing 2 by screwing at 16 positions in the vicinity of the peripheral edge except for screwing the protruding portion 31. The natural frequency in the vertical direction (up-down direction) was around 100 Hz in the comparative example (FIG. 6), whereas a value of 200 Hz or more was obtained in the first embodiment (FIG. 5). In the first embodiment (FIG. 5), four protruding portion 31 are provided on the bottom plate 3, each protruding portion 31 is protruded to both sides of the screw hole 24, and the protruding portion 31 is fixed to the fixing portion 22 by screwing the screw 35 so as to be engaged with each portion protruded to both sides of the screw hole 24. From the above numerical values, a remarkable effect of improving the rigidity was confirmed. It can be said that the effect of improving the rigidity is extremely large and the cost effectiveness is extremely high by slightly enlarging the bottom plate 3 by the protruding portion 31 and performing the screwing by the screw 35 at the illustrated position while suppressing the increase in the component cost and the manufacturing cost. The power supply system 100 according to the present disclosure can suppress the vibration of the heavy battery block 10 in the vertical direction by the rigidity improvement. In addition, in the heat dissipation measurement test, a more preferable result was obtained in the first embodiment (FIG. 5) than in the comparative example (FIG. 6). It can be considered that the presence of the protruding portion 31 improves the thermal conductivity, improves the adhesion between the bottom plate 3 and the bottom surface of the battery block 10, the adhesion between the bottom plate 3 and the cooling plate 4, and the respective thermal coupling states, and the suppression of the vibration of the battery block 10 in the vertical direction also contributes to the stable performance of the cooling plate 4.

The bottom plate 3 may have one or more protruding portion 31. The bottom plate 3 may have as many or fewer protruding portion 31 as the fixing portion 22. The bottom plate 3 in FIG. 5 is provided with the same number of protruding portions 31 as the number of the fixing portion 22, and each protruding portions 31 is arranged at the same position as each fixing portion 22, so that a plurality of protruding portion 31 overlap the bottom surface 23 of the fixing portion 22.

The bottom plate 3 in the figure projects the protruding portion 31 in the same plane. Not only can the cost of parts be reduced, but also the protruding portion 31 can be held in close contact with the fixing portion 22 and the cooling plate 4, and the fixing strength and rigidity of the external housing 2 can be enhanced.

Other embodiments are shown in FIGS. 7 to 12. FIG. 5, which is a basic form for comparison with other embodiments, shows the fixing portion 22 as a triangle, the screw hole 24 is provided in the central region 29, the protruding portion 31 is formed as two triangles in accordance with the shape of the fixing portion 22, and the screw hole 34 is opened in each triangle. In FIG. 7, the fixing portion 22 is trapezoidal, and the length (L2) of the distal end 22b is longer than that in FIG. 5. The area of the protruding portion 31 can be increased by lengthening the coupling portion 22a of the lower base of the trapezoid. In FIG. 8, the fixing portion 22 is semicircular, and the protruding portion 31 is shaped to conform to the shape of the fixing portion 22 along the periphery of the boss screw 26. The protruding portion 31 can protrude outward beyond the outermost point of the boss screw 26, and two or more screw holes 34 can be opened. In FIG. 9, the fixing portion 22 is a triangle larger than that in FIG. 5, and the screw hole 24 is provided in the central region 29. The protruding portion 31 is a triangle conforming to the shape of the fixing portion 22, protrudes outward beyond the outermost point of the boss screw 26, and one screw hole 34 is additionally opened near the vertex, in addition to two screw holes 34 on the base side of the triangle. In FIG. 10, the fixing portion 22 is quadrangular, and the screw hole 24 is provided in the central region 29. The protruding portion 31 is quadrangular conforming to the shape of the fixing portion 22, protrudes outward beyond the outermost point of the boss screw 26, and screw holes 34 are opened at a total of four positions near the four corners of the quadrangle. In FIG. 11, the fixing portion 22 has two screw holes 24 opened at intervals, and the protruding portion 31 is shaped to conform to the shape of the fixing portion 22, with three screw holes 34 opened. In FIGS. 9 to 11, the protruding portion 31 can be more firmly fixed by screwing the screw 35 at three or four points. In FIG. 12, both ends of the coupling portion 22a of the fixing portion 22 are widened to both sides to form a smooth curved surface, the length (L1) of the coupling portion 22a on the root side is increased, and the protruding portion 31 is shaped to conform to the shape of the fixing portion 22. The efficient shape and size of the protruding portion 31 can be determined in accordance with the shape of the fixing portion 22. Depending on the shape and size of the fixing portion 22 and the protruding portion 31, one or more screw holes 24 can be opened in the fixing portion 22, and one or more screw holes 34 can be opened in the protruding portion 31.

### (Insulating Sheet 6)

Power supply system 100 of FIG. 2 further includes an insulating sheet 6 between the cooling plate 4 and the battery block 10. In FIG. 2, the insulating sheet 6 is interposed between the battery block 10 and the cooling plate 4. The insulating sheet 6 is made of a material having insulating properties and excellent thermal conductivity. By interposing the insulating sheet 6 between the battery block 10 and the cooling plate 4, the battery block 10 and the cooling plate 4 are electrically insulated from each other. In particular, when the outer can of the battery cell 1 is made of metal and the cooling plate 4 is also made of metal, it is necessary to provide insulation so that the bottom surface of battery cell 1 does not conduct electricity to the cooling plate 4. For example, while the surface of the outer can is covered with a heat-shrinkable tube or the like for insulation, an insulating sheet 6 may be interposed to further improve the insulating property, thereby improving safety and reliability. The insulating sheet 6 preferably has a certain degree of elasticity, and examples include acrylic, urethane, epoxy, and silicone resins. By providing elasticity to the insulating sheet 6, the surface of the insulating sheet 6 can be elastically deformed to eliminate gaps at the contact surface between the battery block 10 and the cooling plate 4, thereby improving the thermal coupling state. One or more insulating sheets may be interposed. The insulating sheet 6 may be a sheet, film, paste, or the like. In order to further ensure thermal conduction and insulation, a plurality of insulating sheets 6, such as additional films, may be interposed. The insulating sheet 6 is not necessarily required, and may be omitted if sufficient insulation is achieved.

### (Cooling Plate 4)

The cooling plate 4 is a heat dissipator for dissipating heat generated by the battery cell 1 to the outside by thermal conduction. The cooling plate 4 is thermally coupled to the second surface 3b of the bottom plate 3. The power supply system 100 conducts heat generated from the plurality of battery cells 1 to the cooling plate 4 through the bottom plate 3 and radiates the heat to the outside, thereby cooling battery cells 1. For example, a refrigerant pipe can be disposed in the cooling plate 4. The cooling plate 4 can incorporate, as a heat exchanger, a cooling pipe that is a refrigerant pipe made of copper, aluminum, or the like for circulating a liquefied refrigerant as a cooling liquid. The cooling pipe is thermally coupled to, for example, the top plate of the cooling plate 4, and a heat insulating material is disposed between the cooling pipe and the bottom plate to insulate the cooling pipe from the bottom plate. The cooling plate 4 may have a cooling function by a refrigerant or may be formed only of a metal plate. For example, a shape excellent in heat dissipation and heat conductivity, such as a metal body provided with a heat dissipation fin, may be used. Alternatively, a heat transfer sheet having insulating properties may be used instead of the metal sheet.

### (Second Embodiment)

FIG. 13 shows the power supply system 200 according to the second embodiment. The power supply system 200 in FIG. 13 is the same as that in the first embodiment except that the battery cell 1 is a rectangular battery 1B and the external housing 2 includes a bind bar, an end plate, a fastening member, and the like for arranging a plurality of rectangular batteries 1B at predetermined positions and postures, and the above description applies. For example, when the external housing 2 is made of metal or the like to have sufficient strength, the end plate can be fixed to the external housing 2 to fasten the battery block 10. In this configuration, since the external housing 2 also serves as the fastening member, the power supply system 200 can be downsized.

### (Third Embodiment)

FIG. 14 shows the power supply system 300 according to the third embodiment. A plurality of power supply systems 100 and 200 described in the first and second embodiments can be combined. For example, the power supply system 300 in FIG. 14 places the cooling plate 4 between a pair of the external housing 2. Cooling plate 4 is disposed on the lower surface side of each of the pair of the external housing 2 via the bottom plate 3. One or more cooling plates 4 can be deployed, and the same or different the cooling plates 4 can be deployed.

### INDUSTRIAL APPLICABILITY

The present disclosure is useful in a device for cooling a plurality of high-power and heavy secondary battery cells with a cooling plate, as a power supply system capable of efficiently cooling the secondary battery cells with a cooling plate, or as a power supply system with increased rigidity, or as a power supply system that achieves both rigidity and thermal conductivity, and can also be usefully utilized in equipment or devices equipped with any of these.

### REFERENCE MARKS IN THE DRAWINGS

- 100, 200, 300: power supply system
- 1: battery cell
- 1A: cylindrical battery
- 1B: rectangular battery
- 2: external housing
- 3: bottom plate
- 3a: first surface
- 3b: second surface
- 4: cooling plate
- 5: cooling mechanism
- 6: insulating sheet
- 10: battery block
- 20: holder
- 21: side surface
- 21a: inner surface
- 21b: outer surface
- 22: fixing portion
- 22a: coupling portion
- 22b: distal end
- 23: bottom surface
- 24: screw hole
- 25: screw
- 26: boss screw
- 27: boss screw coupling portion
- 29: central region
- 30: bottom plate body
- 31: protruding portion
- 31a: coupling portion
- 31b: distal end
- 34: screw hole
- 35: screw
- 36: screw hole periphery
- 37: fixing portion outer edge

## Claims

1. A power supply system comprising:
a plurality of battery cells each including an end surface;
an external housing which accommodate the plurality of battery cells, has thermal conductivity, and includes a bottom plate on a lower surface of the external housing, the bottom plate being thermally coupled to the end surface of each of the plurality of battery cells; and
a cooling plate which is thermally coupled to a second surface of the bottom plate, the second surface being opposite to a first surface of the bottom plate which is thermally coupled to the end surface of the each of the plurality of battery cells.

2. The power supply system according to claim 1, wherein
the external housing includes a fixing portion, and a screw hole for fixing the external housing to the cooling plate is provided in a part of a side surface of the fixing portion,
the bottom plate includes a protruding portion, and a part of the protruding portion protrudes along an end surface of the fixing portion.

3. The power supply system according to claim 2, wherein
the side surface of the external housing includes a pair of opposing side surfaces,
the external housing includes, on each of the pair of opposing side surfaces of the external housing, the fixing portion protruding along the screw hole, and
the bottom plate includes, on each of a pair of opposing side surfaces of the bottom plate, the protruding portion protruding on both sides of the screw hole.

4. The power supply system according to claim 2, wherein
the side surface of the external housing includes a pair of side surfaces intersecting a longitudinal direction of the external housing,
the external housing includes, on each of a pair of side surfaces, the fixing portion protruding along the screw hole, and
the bottom plate includes, on each end edge of the bottom plate, the protruding portion protruding on both sides of the screw hole.

5. The power supply system according to claim 2, wherein
the bottom plate causes the protruding portion to protrude in a same plane..

6. The power supply system according to claim 2, wherein
the protruding portion is fixed to the external housing by screwing.

7. The power supply system according to any one of claims 2 to 6, wherein
a part of the protruding portion is sandwiched between the fixing portion and the cooling plate.

8. The power supply system according to claim 7, wherein
the external housing includes the bottom plate as a separate member.

9. A power supply system comprising:
a plurality of battery cells;
an external housing accommodating the plurality of battery cells; and
a cooling plate,
wherein each of the plurality of battery cells includes an end surface,
the external housing includes a bottom plate on a first surface of the external housing,
the bottom plate has thermal conductivity and is thermally coupled to the end surface of the each of the plurality of battery cells,
the bottom plate includes a first surface and a second surface, the second surface being opposite to the first surface of the bottom plate,
the first surface of the bottom plate is thermally coupled to the end surface of the each of the plurality of battery cells, and
the cooling plate is thermally coupled to the second surface of the bottom plate.

10. The power supply system according to claim 9, wherein
the external housing includes a second surface intersecting with the first surface of the external housing, and a fixing portion provided on the second surface of the external housing,
the fixing portion includes an end surface, the end surface of the fixing portion is provided with a screw hole for fixing to the cooling plate,
the bottom plate includes a third surface, and at least one protruding portion protruding from the third surface of the bottom plate so as to face the end surface of the fixing portion, and
the third surface of the bottom plate intersects the first surface of the bottom plate and the second surface of the bottom plate.

11. The power supply system according to claim 10, wherein
the second surface of the external housing includes a pair of opposing second surfaces,
the external housing includes, on each of the pair of opposing second surfaces, the fixing portion so as to protrude along a periphery of the screw hole in a direction orthogonal to the second surface of the external housing,
the third surface of the bottom plate includes a pair of opposing third surfaces,
at least two protruding portions include the at least one protruding portion, and
the at least two protruding portions protrude, on each of the pair of opposing third surfaces, on both sides of the screw hole.

12. The power supply system according to claim 11, wherein
the external housing is a rectangular parallelepiped in which the first surface is a rectangle,
the pair of opposing second surfaces of the external housing are surfaces intersecting with a longitudinal direction of the external housing, and
the bottom plate includes the at least two protruding portions at an end edge in the longitudinal direction.

13. The power supply system according to claim 10, wherein
at least two protruding portions include the at least one protruding portion, and
the bottom plate causes the at least two protruding portions to protrude in a same plane.

14. The power supply system according to claim 10, wherein
the bottom plate includes a screw hole, and
at least one protruding portion provided at each edge of the bottom plate is screwed to the external housing by the screw hole and a screw of the bottom plate to be fixed to the external housing.
